# EUROPEAN PATENT APPLICATION

(11) **EP 3 823 312 A1**
(43) Date of publication of application: **19.05.2021**
(21) Application number: 19842129.9
(22) Date of filing: 27.05.2019
(51) Int. Cl.: H04R 29/00

(54) **MICROPHONE HOLE BLOCKING DETECTION METHOD AND RELATED PRODUCT**

(30) Priority: 26.07.2018 CN 201810841696
(71) Applicant: GUANGDONG OPPO MOBILE TELECOMMUNICATIONS CORP., LTD., Wusha, Chang'an Dongguan Guangdong 523860 (CN)
(72) Inventor: YAN, Congwei, Dongguan, Guangdong 523860 (CN)
(74) Representative: Manitz Finsterwald Patent- und Rechtsanwaltspartnerschaft mbB
(86) International application number: PCT/CN2019/088606
(87) International publication number: WO 2020/019857

(57) **Abstract**

Disclosed are a microphone hole blockage detection method and a related product. The method comprises: acquiring a sound wave in a pre-set frequency band by means of a microphone of a first wireless earphone, wherein the pre-set frequency band comprises frequency bands where any one type of the following sound waves is located: an ultrasonic wave, an audible sound wave, and an infrasonic wave; determining a first energy parameter, acquired by the first wireless earphone, of the sound wave; and determining, according to the first energy parameter, that the microphone of the first wireless earphone is in a hole-blocked hole state. By means of the embodiments of the present application, automatic detection of a hole-blocked hole state of a microphone of a wireless earphone is realized, thereby facilitating the improvement of the convenience, flexibility and intelligence of hole blockage detection.

## Description

### FIELD

The described embodiments relate to a terminal technology, and more particularly, to a microphone hole blockage detection method and a related product.

### BACKGROUND

With massive popularity and rapid development of mobile terminals (for example, smart phones), a variety of earphones have become devices that people often use to listen to media. Moreover, earphone cord of wired earphones is often damaged, which shortens the life of the earphones, to case higher cost. Thereby, wireless earphones came into being.

Currently, people often find that holes of a microphone are blocked, such as dust blocking, water droplets blocking, and so on. This causes voice data acquired by a wireless earphone through the microphone to have intermittent sound and low volume, and affects normal use of a user.

### SUMMARY

The embodiment of the present disclosure provides a microphone hole blockage detection method and related products, which may realize automatic detection of the blocked hole state of a wireless earphone microphone. It may be beneficial to improve the convenience, flexibility and intelligence of a blocked hole detection.

The present disclosure provides a microphone hole blockage detection method applied to a first wireless earphone of a wireless earphone; wherein the wireless earphone includes the first wireless earphone and a second wireless earphone; the first wireless earphone is communicatively coupled to a mobile terminal and the second wireless earphone; and the method includes: acquiring a sound wave of a preset frequency band through a microphone of the first wireless earphone, where the preset frequency band includes a frequency band in which any types of sound wave including an ultrasonic wave, an audible sound wave, and an infrasound wave, are located; determining whether the microphone of the first wireless earphone is in a blocked hole state according to the first energy parameter.

The present disclosure provides a microphone hole blockage detection device applied to a first wireless earphone of a wireless earphone; wherein the wireless earphone includes the first wireless earphone and a second wireless earphone; the first wireless earphone is communicatively coupled to a mobile terminal and the second wireless earphone; and the microphone hole blockage detection device includes a processing unit and a communication unit; and the processing unit is configured to control the communication unit to acquire a sound wave of a preset frequency band through a microphone of the first wireless earphone, where the preset frequency band includes a frequency band in which any types of sound wave including an ultrasonic wave, an audible sound wave, and an infrasound wave, are located; the processing unit is configured to determine a first energy parameter of the sound wave acquired by the first wireless earphone; and the processing unit is configured to determine whether the microphone of the first wireless earphone is in a blocked hole state according to the first energy parameter.

The present disclosure provides a first wireless earphone, including: a processor, a memory, and at least one of programs; wherein the at least one of programs are stored in the memory and configured to be executed by the processor; the at least one of programs include instructions configured to execute operations in the above-mentioned method.

The present disclosure provides a computer readable storage medium, configured to store a computer program for electronic data exchange; wherein the computer program is configured to execute operations in the above-mentioned method.

The present disclosure provides a computer program product. The computer program product includes a non-transitory computer-readable storage medium storing a computer program; the computer program is operable to cause a computer to execute any of part or all of the operations in the above-mentioned embodiments of the microphone hole blockage detection method. The computer program product may be a software installation package.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

### BRIEF DESCRIPTION OF THE DRAWINGS

In order to clearly illustrate the technical solutions of the present disclosure, the drawings used in the description of the embodiments will be briefly described. It is understood that the drawings described herein are merely some embodiments of the present disclosure. Those skilled in the art may derive other drawings from these drawings without inventive effort.
Fig. 1 is a system architecture illustration of a first wireless earphone system in accordance with an embodiment in the present disclosure.
Fig. 2 is a flow chart of a microphone hole blockage detection method in accordance with an embodiment in the present disclosure.
Fig. 3 is a flow chart of a microphone hole blockage detection method in accordance with an embodiment in the present disclosure.
Fig. 4 is a flow chart of a microphone hole blockage detection method in accordance with an embodiment in the present disclosure.
Fig. 5 is a structural illustration of a first wireless earphone in accordance with an embodiment in the present disclosure.
Fig. 6 is a functional unit block diagram of a microphone hole blockage detection device in accordance with an embodiment in the present disclosure.

### DETAILED DESCRIPTION

The detailed description set forth below is intended as a description of the subject technology with reference to the appended figures and embodiments. It is understood that the embodiments described here include merely some parts of the embodiments of the present disclosure, but do not include all the embodiments. Based on the embodiments of the present disclosure, all other embodiments that those skilled in the art may derive from these embodiments are within the scope of the present disclosure.

The terms "first" and "second" in the specification and claims of the present disclosure and the above-mentioned drawings are used to distinguish different objects, rather than to describe a specific sequence. In addition, the terms "including" and "having" and any variations thereof are intended to cover non-exclusive inclusion. For example, a process, method, system, product, or device that includes a series of operations or units is not limited to the listed operations or units, but optionally includes unlisted operations or units, or optionally also includes other operations or units inherent to these processes, methods, products or equipment.

Reference throughout this specification, the reference terms "an embodiment", "some embodiments", "one embodiment", "another example", "an example", "a specific example", or "some examples", and the like means that a specific feature, structure, material, or characteristic described in connection with the embodiment or example is included in at least one embodiment or example of the present disclosure. Thus, the illustrative descriptions of the terms throughout this specification are not necessarily referring to the same embodiment or example of the present disclosure. Furthermore, the specific features, structures, materials, or characteristics may be combined in any suitable manner in one or more embodiments or examples. In addition, one skilled in the art may combine the different embodiments or examples described in this specification and features of different embodiments or examples without conflicting with each other.

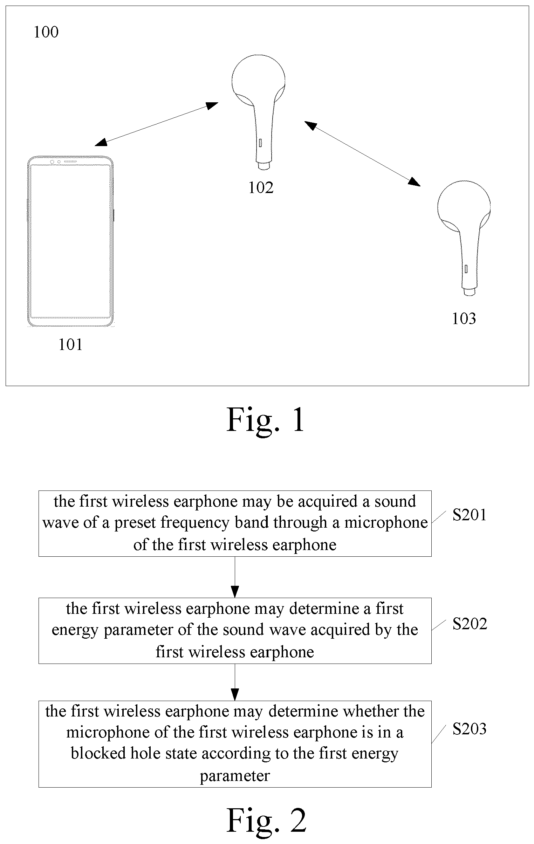

As shown in Fig. 1, an embodiment of the present disclosure provides a first wireless earphone system 100, which may include a mobile terminal 101, a first wireless earphone 102, and a second wireless earphone 103. The mobile terminal 101 may have established a first communication link with the first wireless earphone 102, and the first wireless earphone 102 may have established a second communication link with the second wireless earphone 103, i.e., the communication mechanism between the first wireless earphone 102 and the second wireless earphone 103 and the mobile terminal 101 may adopt a master-slave communication mechanism (e.g., a BLUETOOTH protocol may be adopted). The main earphone may be an earphone that directly establishes a communication link with the mobile terminal 101 to perform a preset type of data interaction. A slave earphone may be an earphone that is transferred through the main earphone and then performs a preset type of data interaction with the mobile terminal 101. The preset type of data may include media data and/or call data. The media data may be audio data and/or video data of the mobile terminal 101 other than call voice data, and the call data may be call voice data of the mobile terminal 101. The first wireless earphone 102 and the second wireless earphone 103 may be BLUETOOTH wireless earphones, and so on. The mobile terminal 101 may include various handheld devices with wireless communication functions, vehicle-mounted devices, wearable devices (such as a smart watch, a smart bracelet, a pedometer, and so on), computing devices or other processing devices coupled to wireless modems, and various forms of a user equipment (UE), a mobile station (MS), a terminal device, and so on. For easy of description, the above-mentioned devices may be collectively referred to as a mobile terminal. The embodiments of the present disclosure are described in detail in the following.

Fig. 2 illustrates a flow chart of a microphone hole blockage detection method in accordance with an embodiment in the present disclosure, which may be applied to a wireless earphone. The wireless earphone may include a first wireless earphone and a second wireless earphone. The first wireless earphone may be communicatively couple to the mobile terminal and the second wireless earphone. As shown in the figure, the microphone hole blockage detection method may include operations in the following blocks.

Block S201, the first wireless earphone may be acquired a sound wave of a preset frequency band through a microphone of the first wireless earphone, where the preset frequency band may include a frequency band in which any types of sound wave including an ultrasonic wave, an audible sound wave, and an infrasound wave, are located.

The sound wave may include an ultrasonic wave, an audible sound wave, and an infrasound wave. A frequency band of the ultrasonic wave may be in a range of 20kHz to 1 GHz. A frequency band the audible sound may be located in a frequency band in a range of 20 kHz to 20 Hz, that may be heard by the human ear. A frequency band of the infrasound wave may be below 20 Hz.

The sound wave of the preset frequency band acquired by the microphone may be a sound wave of an ambient sound, or the sound wave emitted by the mobile terminal or a speaker of the first wireless earphone or the second wireless earphone, and is not limited here.

Block 202, the first wireless earphone may determine a first energy parameter of the sound wave acquired by the first wireless earphone.

The sound wave may be a kind of mechanical wave. Therefore, the sound wave itself may have energy, which may be calculated by density, a frequency, an amplitude and wave speed of a propagating medium, i.e., an average value of energy flowing through the medium per unit area per unit time may represent the energy of the sound per unit area. A formula configured to calculate the energy of a sound wave may be (P^{∗}w^{∗}w^{∗}u^{∗}A^{∗}A)/2, where the parameter P may be density of a medium, the parameter w may be a sound frequency, the parameter A may be an amplitude, and the parameter u may be wave speed.

Block 203, the first wireless earphone may determine whether the microphone of the first wireless earphone is in a blocked hole state according to the first energy parameter.

The implementation that the first wireless earphone determines whether the microphone of the first wireless earphone is in a blocked hole state according to the first energy parameter, may be various, and is not limited here.

For example, the first wireless earphone may compare the first energy parameter with a reference energy parameter. When the first energy parameter mismatching the reference energy parameter is detected, the microphone of the first wireless earphone being in the blocked hole state, may be determined.

For example, the first wireless earphone may compare the first energy parameter with a second energy parameter of the sound wave acquired by the second wireless earphone, i.e., the first wireless earphone and the second wireless earphone may simultaneously acquire the sound wave of the preset frequency band. The second wireless earphone is known to be in a non-blocked hole state. When the first energy parameter mismatching the second energy parameter is detected, the microphone of the first wireless earphone being in the blocked hole state, may be determined.

For example, the mobile terminal (in a non-blocked hole state) may acquire a third energy parameter of the sound wave. The first wireless earphone being in the blocked hole state, may be determined by comparing the first energy parameter with the third energy parameter.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

In an embodiment, the operation that the first wireless earphone determines whether the microphone of the first wireless earphone is in a blocked hole state according to the first energy parameter, may include operations in the following. The first wireless earphone may acquire a reference energy parameter of the sound wave. The reference energy parameter may be configured to represent an energy parameter after the sound wave is transmitted by a sound source in preset distance. The preset distance may be distance between the sound source and the microphone of the first wireless earphone. The first energy parameter may be compared with the reference energy parameter. When the first energy parameter mismatching the reference energy parameter is detected, the microphone of the first wireless earphone being in the blocked hole state, may be determined.

The operation that the first energy parameter mismatching the reference energy parameter is detected, may be that a matching degree between the energy parameter and the reference energy parameter is less than a preset matching degree threshold. For example, the matching degree may be less than 50%, and so on, and is not limited here.

The sound source may be the first wireless earphone or the second wireless earphone or the mobile terminal. There may be no obstruction between the sound source and the microphone of the first wireless earphone.

In this embodiment, since the microphone hole is not blocked, the sound wave may directly pass through the microphone hole and be acquired by the microphone. In this state, the energy parameter of the sound wave may be the reference energy parameter. On the contrary, when the microphone hole is blocked, a part of the sound wave may be attenuated due to reflection or refraction, so that the energy of the sound wave may be greatly reduced. That is, the first energy parameter being less than the reference energy parameter, may be actually detected, so that the hole blockage detection of the first wireless earphone may be realized. It may be beneficial to improving accuracy of the hole blockage detection.

In this embodiment, the operation that the first wireless earphone acquires the reference energy parameter of the sound wave, may include operations in the following. The first wireless earphone may acquire a frequency and initial an amplitude of the sound wave. Distance between the sound source and the microphone of the first wireless earphone, may be acquired. A reference amplitude after the sound wave is transmitted in the distance, may be determined according to the initial amplitude and the distance. The reference energy parameter of the sound wave may be determined according to the frequency and the reference amplitude.

Since an environmental medium of the sound wave is air when the first wireless earphone performs the hole blockage detection process, medium density and wave velocity in an energy calculation formula may be both constants. The frequency and the amplitude of the sound wave may be determined, so that the energy of the sound wave in an initial state and an acquired state may be calculated.

When the sound source is a speaker of the first wireless earphone, the preset distance may be distance between the speaker of the first wireless earphone and the microphone of the first wireless earphone. The distance may be determined based on a structural relationship between the speaker and the microphone of the first wireless earphone.

When the sound source is a speaker of the second wireless earphone (or the mobile terminal), the preset distance may be distance between the speaker of the second wireless earphone and the microphone of the first wireless earphone. The distance may be determined based on signaling interaction between the first wireless earphone and the second wireless earphone. For example, the first wireless earphone may send a first message to the second wireless earphone to notify sound wave transmission. The second wireless earphone may determine the distance based on time that when the first message is received and time that when the sound wave is acquired. For example, both the first wireless earphone and the second wireless earphone may be positioned by themselves. The distance may be determined through position message interaction.

In this embodiment, the first wireless earphone may accurately determine the reference energy parameter based on the related parameters, so that the first energy parameter and the reference energy parameter may be compared. It may be beneficial to improve the accuracy of the hole blockage detection.

In an embodiment, the method may further include operations in the following. The first wireless earphone may control the microphone of the second wireless earphone to acquire the sound wave of the preset frequency band. A second energy parameter of the sound wave acquired by the second wireless earphone, may be determined.

The operation that the first wireless earphone determines whether the microphone of the first wireless earphone being in the blocked hole state according to the first energy parameter, may include operations in the following. The first wireless earphone may compare the first energy parameter with the second energy parameter. When the first energy parameter mismatching the second energy parameter is detected, the microphone of the first wireless earphone being in the blocked hole state, may be determined.

The second wireless earphone may be in a non-blocked hole state. The implementation that the first wireless earphone controls the microphone of the second wireless earphone to acquire the sound wave of the preset frequency band, may include operations in the following. The first wireless earphone may send a notification message to the second wireless earphone, and the second wireless earphone may acquire the sound wave according to the notification message and send it to the first wireless earphone.

The sound source may be a mobile terminal, and there may be no obstruction between the first wireless earphone and the second wireless earphone, and the mobile terminal, i.e., the first wireless earphone and the second wireless earphone may directly receive the sound wave emitted by the speaker of the mobile terminal.

In this embodiment, the first wireless earphone may simultaneously acquire the sound wave by controlling the second wireless earphone, and then the hole blockage state may be determined by comparing the first energy parameter acquired by the first wireless earphone and the second energy parameter acquired by the second wireless earphone. The two wireless earphones may be in the same environment, it may help avoid environmental interference and further improve the accuracy of the hole blockage detection.

In an embodiment, before the first wireless earphone acquires the sound wave of the preset frequency band through the microphone of the first wireless earphone, the method may further include operations in the following. The first wireless earphone may acquire a first distance parameter between the first wireless earphone and the mobile terminal, and a second distance parameter between the first wireless earphone and the second wireless earphone. When the first distance parameter being greater than the second distance parameter is detected, the speaker of the second wireless earphone may be controlled to emit the sound wave of the preset frequency band.

The second wireless earphone may be in a non-wearing state. The implementation that the first distance parameter and the second distance parameter are determined, may be various. For example, a user may wear the first wireless earphone, and the first distance parameter and the second distance parameter may be determined by determining the distance parameter between the mobile terminal or the second wireless earphone, and the user. For example, signaling transmission time may be determined through signaling interaction between the first wireless earphone and the mobile terminal or the second wireless earphone, and the first distance parameter and the second distance parameter may be determined according to the signaling transmission time and transmission speed. It is not limited here.

In this embodiment, the first wireless earphone may control the mobile terminal close to the first wireless earphone or the second wireless earphone to emit a sound wave. It may be beneficial to avoid serious attenuation of the sound wave received by the first wireless earphone when distance is long, to improve the accuracy of the hole blockage detection. Moreover, the speaker of the mobile terminal or the second wireless earphone may be controlled to emit a sound wave instead of the speaker of the first wireless earphone emits a sound wave. It may be beneficial to avoid situation that a user cannot detect the blocked hole state when the user is wearing the first wireless earphone. It may improve convenience of the hole blockage detection.

In an embodiment, after the first wireless earphone determines that the microphone of the first wireless earphone is in the blocked hole state according to the first energy parameter, the method may further include operations in the following. When a sound pickup request is detected and the first wireless earphone is in a wearing state, the wearing state of the second wireless earphone may be determined. When the second wireless earphone being in the wearing state is detected, a sound pickup function of the microphone of the first wireless earphone may be disabled. The sound pickup function may be performed by the microphone of the second wireless earphone.

The implementation that the sound pickup request is detected, may be various. For example, it may receive a sound pickup request sent by the mobile terminal. The sound pickup request may be a sound pickup request when a chat application (such as WeChat, QQ, and so on) is a foreground application. The sound pickup request may be triggered by a user long pressing the designated button on the touch screen, and so on. It is not limited here. The sound pickup request may indicate that a user needs to record voice data.

The first wireless earphone may determine the wearing state of the second wireless earphone by detecting contact with an ear contour through multiple proximity sensors or pressure sensors. The wearing state of the wireless earphone may also be determined by a posture parameter of the second wireless earphone. The wearing state of the wireless earphone of the second wireless earphone may also be determined by detecting a communication identifier of a successful communication connection with the mobile terminal. The wearing state of the wireless earphone of the second wireless earphone may also be determined by detecting a music playback message. It is not limited here.

In this embodiment, after the blocked hole state of the first wireless earphone is determined, when a sound pickup request for voice data is detected, it may determine whether the second wireless earphone is in the wearing state. When the second wireless earphone is in the wearing state, the second wireless earphone may be switched to acquire voice data, and a voice acquisition function of the first wireless earphone may be disabled simultaneously. It may be beneficial to improve integrity of voice data acquisition and reduce power consumption of the first wireless earphone.

In this embodiment, the method may further include operations in the following. When the first wireless earphone detects that the second wireless earphone is in a non-wearing state, a third distance parameter between the first wireless earphone and the mobile terminal, and a fourth distance parameter between the first wireless earphone and the second wireless earphone, may be acquired. When the third distance parameter being less than the fourth distance parameter is detected, a notification message may be sent to the mobile terminal. The notification message may be configured to notify the mobile terminal to perform the sound pickup function through a microphone of the mobile terminal.

In this embodiment, after the blocked hole state of the first wireless earphone is determined, when a voice pickup request for voice data is detected and the second wireless earphone being in the non-wearing state is determined, the mobile terminal that is close to the first wireless earphone may be determined, and the mobile terminal may be notified to acquire voice data. It may be beneficial to ensure clarity of voice data acquisition.

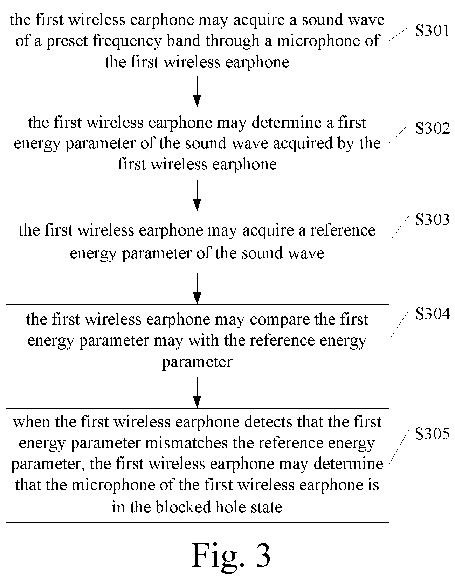

In an embodiment same as the embodiment shown in Fig. 2, Fig. 3 illustrates a flow chart of a microphone hole blockage detection method in accordance with an embodiment in the present disclosure, which may be applied to a wireless earphone. The wireless earphone may include a first wireless earphone and a second wireless earphone. The first wireless earphone may include a microphone. As shown in the figure, the microphone hole blockage detection method may include operations in the following blocks.

Block S301, the first wireless earphone may acquire a sound wave of a preset frequency band through a microphone of the first wireless earphone, where the preset frequency band may include a frequency band in which any types of sound wave including an ultrasonic wave, an audible sound wave, and an infrasound wave, are located.

Block 302, the first wireless earphone may determine a first energy parameter of the sound wave acquired by the first wireless earphone.

Block S303, the first wireless earphone may acquire a reference energy parameter of the sound wave, where the reference energy parameter may be configured to represent an energy parameter after the sound wave is transmitted by a sound source in preset distance, and the preset distance may be distance between the sound source and the microphone of the first wireless earphone.

Block S304, the first wireless earphone may compare the first energy parameter may with the reference energy parameter.

Block S305, when the first wireless earphone detects that the first energy parameter mismatches the reference energy parameter, the first wireless earphone may determine that the microphone of the first wireless earphone is in the blocked hole state.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

In this embodiment, since the microphone hole is not blocked, the sound wave may directly pass through the microphone hole and be acquired by the microphone. In this state, the energy parameter of the sound wave may be the reference energy parameter. On the contrary, when the hole is blocked, a part of the sound wave may be attenuated due to reflection or refraction, so that the energy of the sound wave may be greatly reduced. That is, the first energy parameter being less than the reference energy parameter, may be actually detected, so that the hole blockage detection of the first wireless earphone may be realized. It may be beneficial to improving accuracy of the hole blockage detection.

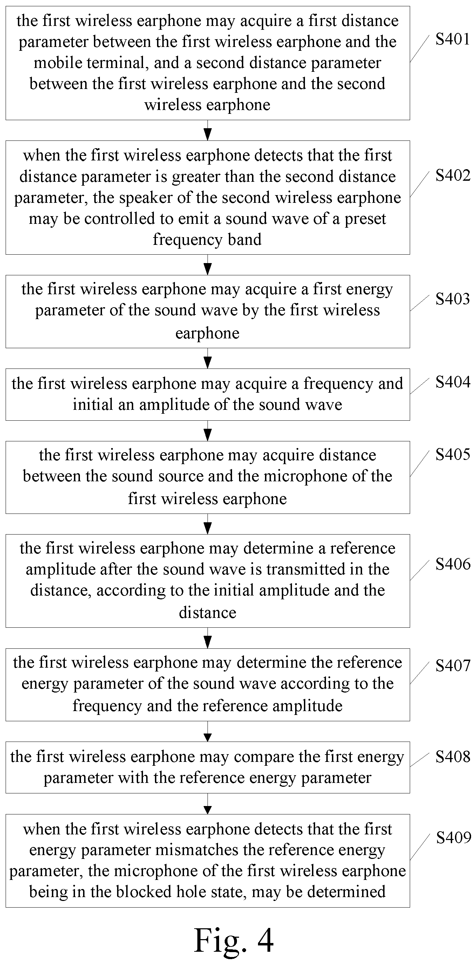

In an embodiment same as the embodiment shown in Fig. 2, Fig. 4 illustrates a flow chart of a microphone hole blockage detection method in accordance with an embodiment in the present disclosure, as shown in the figure, the microphone hole blockage detection method may include operations in the following blocks.

Block S401, the first wireless earphone may acquire a first distance parameter between the first wireless earphone and the mobile terminal, and a second distance parameter between the first wireless earphone and the second wireless earphone.

Block S402, when the first wireless earphone detects that the first distance parameter is greater than the second distance parameter, the speaker of the second wireless earphone may be controlled to emit a sound wave of a preset frequency band, where the preset frequency band may include a frequency band in which any types of sound wave including an ultrasonic wave, an audible sound wave, and an infrasound wave, are located.

Block 403, the first wireless earphone may acquire a first energy parameter of the sound wave by the first wireless earphone.

Block S404, the first wireless earphone may acquire a frequency and initial an amplitude of the sound wave.

Block S405, the first wireless earphone may acquire distance between the sound source and the microphone of the first wireless earphone.

Block S406, the first wireless earphone may determine a reference amplitude after the sound wave is transmitted in the distance, according to the initial amplitude and the distance.

Block S407, the first wireless earphone may determine the reference energy parameter of the sound wave according to the frequency and the reference amplitude.

Block S408, the first wireless earphone may compare the first energy parameter with the reference energy parameter.

Block S409, when the first wireless earphone detects that the first energy parameter mismatches the reference energy parameter, the microphone of the first wireless earphone being in the blocked hole state, may be determined.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

In addition, the first wireless earphone may accurately determine the reference energy parameter based on the related parameters, so that the first energy parameter and the reference energy parameter may be compared. It may be beneficial to improve the accuracy of the hole blockage detection.

In addition, the first wireless earphone may control the mobile terminal close to the first wireless earphone or the second wireless earphone to emit a sound wave. It may be beneficial to avoid serious attenuation of the sound wave received by the first wireless earphone when distance is long, to improve the accuracy of the hole blockage detection. Moreover, the speaker of the mobile terminal or the second wireless earphone may be controlled to emit a sound wave instead of the speaker of the first wireless earphone emits a sound wave. It may be beneficial to avoid situation that a user cannot detect the blocked hole state when the user is wearing the first wireless earphone. It may improve convenience of the hole blockage detection.

In an embodiment same as the embodiment shown in Fig. 2, Fig. 3, and Fig. 4, Fig. 5 illustrates a structural illustration of a first wireless earphone 500 in accordance with an embodiment in the present disclosure. The wireless earphone may include a first wireless earphone and a second wireless earphone. As shown in figure, the first wireless earphone may include a processor 501, a memory 502, a communication interface 503, and at least one of programs 504. The programs 504 may be stored in the memory 502 and may be configured to be executed by the processor 501. The programs may include instructions configured to execute operations in the following.

A sound wave of a preset frequency band may be acquired through a microphone of the first wireless earphone, where the preset frequency band may include a frequency band in which any types of sound wave including an ultrasonic wave, an audible sound wave, and an infrasound wave, are located.

A first energy parameter of the sound wave acquired by the first wireless earphone, may be determined.

Whether the microphone of the first wireless earphone being in a blocked hole state, may be determined according to the first energy parameter.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

In an embodiment, when whether the microphone of the first wireless earphone being in the blocked hole state, is determined according to the first energy parameter, the programs 504 may be configured to execute operations in the following. A reference energy parameter of the sound wave may be acquired, where the reference energy parameter may be configured to represent an energy parameter after the sound wave is transmitted by a sound source in preset distance, and the preset distance may be distance between the sound source and the microphone of the first wireless earphone. The first energy parameter may be compared with the reference energy parameter. When the first energy parameter mismatching the reference energy parameter is detected, the microphone of the first wireless earphone being in the blocked hole state, may be determined.

In this embodiment, when the reference energy parameter of the sound wave is acquired, the programs 504 may be further configured to execute operations in the following. A frequency and initial an amplitude of the sound wave, may be acquired. Distance between the sound source and the microphone of the first wireless earphone, may be acquired. A reference amplitude after the sound wave is transmitted in the distance, may be determined according to the initial amplitude and the distance. The reference energy parameter of the sound wave may be determined according to the frequency and the reference amplitude.

In an embodiment, the programs 504 may be further configured to execute operations in the following. The microphone of the second wireless earphone may be controlled to acquire the sound wave of the preset frequency band. A second energy parameter of the sound wave acquired by the second wireless earphone, may be determined.

When whether the microphone of the first wireless earphone being in the blocked hole state, is determined according to the first energy parameter, the programs 504 may be configured to execute operations in the following. The first energy parameter may be compared with the second energy parameter. When the first energy parameter mismatching the second energy parameter is detected, the microphone of the first wireless earphone being in the blocked hole state, may be determined.

In an embodiment, the programs 504 may be further configured to execute operations in the following. Before the sound wave of the preset frequency band is acquired through the microphone of the first wireless earphone, a first distance parameter between the first wireless earphone and the mobile terminal, and a second distance parameter between the first wireless earphone and the second wireless earphone, may be acquired. When the first distance parameter being greater than the second distance parameter is detected, the speaker of the second wireless earphone may be controlled to emit the sound wave of the preset frequency band.

In an embodiment, the programs 504 may be further configured to execute operations in the following. After the microphone of the first wireless earphone being in the blocked hole state, is determined according to the first energy parameter, when a sound pickup request is detected and the first wireless earphone is in a wearing state, the wearing state of the second wireless earphone may be determined. When the second wireless earphone being in the wearing state is detected, a sound pickup function of the microphone of the first wireless earphone may be disabled. The sound pickup function may be performed by the microphone of the second wireless earphone.

In this embodiment, the programs 504 may be further configured to execute operations in the following. After the wearing state of the second wireless earphone is determined, when the second wireless earphone being in a non-wearing state, is detected, a third distance parameter between the first wireless earphone and the mobile terminal, and a fourth distance parameter between the first wireless earphone and the second wireless earphone, may be acquired. When the third distance parameter being less than the fourth distance parameter is detected, a notification message may be sent to the mobile terminal. The notification message may be configured to notify the mobile terminal to perform the sound pickup function through a microphone of the mobile terminal.

The above-mentioned description mainly introduces a solution of the embodiments of the present disclosure from the perspective of the execution process on the method side. It may be understood that, in order to implement the above-mentioned functions, the first wireless earphone may include hardware structures and/or software modules corresponding to each function. Those skilled in the art should easily realize that in combination with the units and algorithm operations of the examples described in the embodiments provided herein, the present disclosure may be implemented in the form of hardware or a combination of hardware and computer software. Whether a function is executed by hardware or computer software-driven hardware depends on the specific application and design constraints of the technical solution. Professionals and technicians may use different methods for each specific application to implement the described functions, but such implementation should not be considered beyond the scope of this disclosure.

The embodiments of the present disclosure may divide the first wireless earphone into functional units according to the above-mentioned embodiments. For example, each functional unit may be divided corresponding to each function, or two or more functions may be integrated into one processing unit. The above-mentioned integrated unit may be implemented in a form of hardware or software functional unit. It should be noted that the division of units in the embodiments of the present disclosure is illustrative, and is only a logical function division, and there may be other division methods in actual implementation.

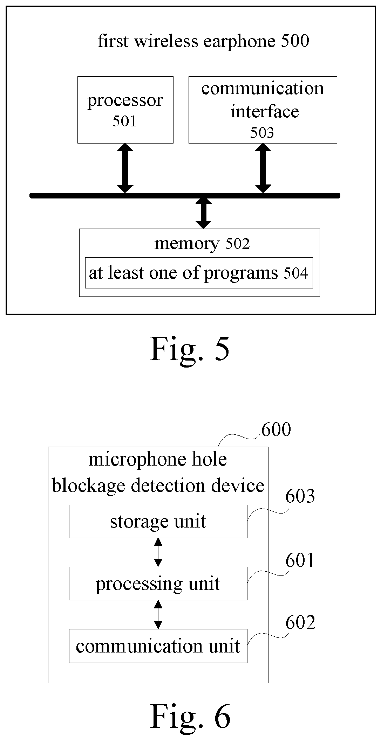

Fig. 6 illustrates a functional unit block diagram of a microphone hole blockage detection device 600 in accordance with an embodiment in the present disclosure. The microphone hole blockage detection device 600 may be applied to a wireless earphone. The wireless earphone may include a first wireless earphone and a second wireless earphone. The first wireless earphone may be communicatively coupled to the mobile terminal and the second wireless earphone. The microphone hole blockage detection device 600 may include a processing unit 601 and a communication unit 602.

The processing unit 601 may be configured to control the communication unit 602, to acquire a sound wave of a preset frequency band through a microphone of the first wireless earphone, where the preset frequency band includes a frequency band in which any types of sound wave including an ultrasonic wave, an audible sound wave, and an infrasound wave, are located; the processing unit is configured to determine a first energy parameter of the sound wave acquired by the first wireless earphone; and the processing unit is configured to determine whether the microphone of the first wireless earphone is in a blocked hole state according to the first energy parameter.

The microphone hole blockage detection device 600 may also include a storage unit 603 configured to store a program code and data of the mobile terminal. The processing unit 601 may be a processor. The communication unit 602 may be a touch screen or a transceiver. The storage unit 603 may be a memory.

In this embodiment of the present disclosure, the first wireless earphone may first acquire the sound wave of the preset frequency band through the microphone of the first wireless earphone. The preset frequency band may include the frequency band in which any types of sound wave including an ultrasonic wave, an audible sound wave, and an infrasound wave, are located. Second, the first energy parameter of the sound wave acquired by the first wireless earphone, may be determined. Finally, according to the first energy parameter, the microphone of the first wireless earphone is in the blocked hole state, may be determined. The first wireless earphone may acquire the sound wave through the microphone, and the blocked hole state may be determined according to the energy parameter of the sound wave, which may be beneficial to improve convenience of the hole blockage detection. Moreover, due to universality of sound waves, it may improve flexibility of the hole blockage detection. In addition, the entire detection process may be performed autonomously by the wireless earphone, which may realize an automatic detection of the blocked hole state of the wireless earphone microphone. It may detect that the microphone is in the blocked hole state without increasing a hardware structure, which may expand functions of the wireless earphone and improve intelligence of the blocked hole detection.

In an embodiment, when whether the microphone of the first wireless earphone being in the blocked hole state, is determined according to the first energy parameter, the processing unit 601 may be configured to acquire a reference energy parameter of the sound wave. The reference energy parameter may be configured to represent an energy parameter after the sound wave is transmitted by a sound source in preset distance. The preset distance may be distance between the sound source and the microphone of the first wireless earphone. The processing unit 601 may be further configured to compare the first energy parameter may with the reference energy parameter. The processing unit 601 may be further configured to determine that the microphone of the first wireless earphone is in the blocked hole state, when the first energy parameter mismatching the reference energy parameter is detected.

In this embodiment, when the reference energy parameter of the sound wave is acquired, the processing unit 601 may be configured to acquire a frequency and initial an amplitude of the sound wave. The processing unit 601 may be further configured to acquire distance between the sound source and the microphone of the first wireless earphone. The processing unit 601 may be further configured to determine a reference amplitude after the sound wave is transmitted in the distance, according to the initial amplitude and the distance. The processing unit 601 may be further configured to determine the reference energy parameter of the sound wave according to the frequency and the reference amplitude.

In an embodiment, the processing unit 601 may be further configured to control the microphone of the second wireless earphone to acquire the sound wave of the preset frequency band. The processing unit 601 may be further configured to determine a second energy parameter of the sound wave acquired by the second wireless earphone.

When whether the microphone of the first wireless earphone being in the blocked hole state, is determined according to the first energy parameter, the processing unit 601 may be further configured to compare the first energy parameter with the second energy parameter. The processing unit 601 may be further configured to determine that the microphone of the first wireless earphone is in the blocked hole state, when the first energy parameter mismatching the second energy parameter is detected.

In an embodiment, before the sound wave of the preset frequency band is acquired through the microphone of the first wireless earphone, the processing unit 601 may be further configured to acquire a first distance parameter between the first wireless earphone and the mobile terminal, and a second distance parameter between the first wireless earphone and the second wireless earphone. The processing unit 601 may be further configured to control the speaker of the second wireless earphone to emit the sound wave of the preset frequency band, when the first distance parameter being greater than the second distance parameter is detected.

In an embodiment, after the microphone of the first wireless earphone being in the blocked hole state, is determined according to the first energy parameter, the processing unit 601 may be further configured to determine the wearing state of the second wireless earphone, when a sound pickup request is detected and the first wireless earphone is in a wearing state. The processing unit 601 may be further configured to disable a sound pickup function of the microphone of the first wireless earphone, when the second wireless earphone being in the wearing state is detected. The processing unit 601 may be further configured to perform the sound pickup function through the microphone of the second wireless earphone.

In an embodiment, after the wearing state of the second wireless earphone is determined, when the second wireless earphone being in a non-wearing state, is detected, the processing unit 601 may be further configured to acquire a third distance parameter between the first wireless earphone and the mobile terminal, and a fourth distance parameter between the first wireless earphone and the second wireless earphone. When the third distance parameter being less than the fourth distance parameter is detected, the processing unit 601 may be further configured to send a notification message to the mobile terminal. The notification message may be configured to notify the mobile terminal to perform the sound pickup function through a microphone of the mobile terminal.

In an embodiment, the present disclosure also provides a computer storage medium. The computer storage medium may be configured to store a computer program for electronic data exchange. The computer program may cause a computer to execute any of part or all of the operations in the above-mentioned embodiments of the microphone hole blockage detection method. The above-mentioned computer may include an electronic apparatus.

In an embodiment, the present disclosure also provides a computer program product. The computer program product may include a non-transitory computer-readable storage medium storing a computer program. The computer program may be operable to cause a computer to execute any of part or all of the operations in the above-mentioned embodiments of the microphone hole blockage detection method. The above-mentioned computer may include an electronic apparatus.

It should be noted that, for the above-mentioned method embodiments, for a simple description, the above-mentioned method embodiments are all expressed as a series of action combinations. However, those skilled in the art should know that the present disclosure is not limited by the described sequence of operations. Because according to the present disclosure is, some operations may be performed in other order or simultaneously. Those skilled in the art should also know that the embodiments described in the specification are all preferred embodiments. The operations and modules involved are not necessarily required by the present disclosure.

In the above-mentioned embodiments, the description of each embodiment has its own focus. For parts that are not described in detail in an embodiment, reference may be made to related descriptions of other embodiments.

In the several embodiments provided in the present disclosure, it should be understood that the disclosed device may be implemented in other ways. For example, the above-mentioned device embodiments are merely illustrative. For example, the division of the units is only a logical function division, and there may be other divisions in actual implementation, for example, multiple units or components may be combined or may be integrate into another system, or some features may be ignored or not implemented. In addition, the displayed or discussed mutual coupling or direct coupling or communication connection may be indirect coupling or communication connection through some interfaces, devices or units, and may be in electrical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit. The above-mentioned integrated unit may be implemented in the form of hardware or software functional unit.

When the integrated unit is implemented in the form of a software functional unit and sold or used as an independent product, it may be stored in a computer readable memory. Based on this understanding, the technical solution of the present disclosure essentially or the part that contributes to the existing technology, or all or part of the technical solution may be embodied in the form of a software product, and the computer software product is stored in a memory. It includes several instructions to make a computer device (which may be a personal computer, a server, or a network device, and so on) execute all or part of the operations in the above-mentioned embodiments of the microphone hole blockage detection method. The aforementioned memory includes: a USB stick, a read-only memory (ROM), a random access memory (RAM), a mobile hard disk, magnetic disk or optical disk and other media that may store program codes.

Those of ordinary skill in the art may understand that all or part of the operations in the various methods of the above-mentioned embodiments may be completed by instructing relevant hardware through a program. The program may be stored in a computer-readable memory. The memory may include: a flash disk, a read-only memory (ROM), a random access memory (RAM), a magnetic disk or an optical disk, and so on.

The embodiments of the present disclosure are described in detail above, and specific examples are used in this article to illustrate the principles and implementation of the present disclosure. The descriptions of the above-mentioned embodiments are only used to help understand the methods and core ideas of the disclosure. A person of ordinary skill in the art, based on the idea of the present disclosure, will have changes in the specific implementation and the scope of the present disclosure. In summary, the content of this specification should not be construed as a limitation to the present disclosure.

## Claims

1. A microphone hole blockage detection method applied to a first wireless earphone of a wireless earphone; wherein the wireless earphone comprises the first wireless earphone and a second wireless earphone; the first wireless earphone is communicatively coupled to a mobile terminal and the second wireless earphone; and the method comprises:
acquiring a sound wave of a preset frequency band through a microphone of the first wireless earphone, where the preset frequency band comprises a frequency band in which any types of sound wave comprising an ultrasonic wave, an audible sound wave, and an infrasound wave, are located;
determining a first energy parameter of the sound wave acquired by the first wireless earphone; and
determining whether the microphone of the first wireless earphone is in a blocked hole state according to the first energy parameter.

2. The method as claimed in claim 1, wherein the determining whether the microphone of the first wireless earphone being in the blocked hole state according to the first energy parameter, comprises:
acquiring a reference energy parameter of the sound wave, wherein the reference energy parameter is configured to represent an energy parameter after the sound wave is transmitted by a sound source in preset distance; and the preset distance is distance between the sound source and the microphone of the first wireless earphone;
comparing the first energy parameter with the reference energy parameter; and
when the first energy parameter mismatching the reference energy parameter is detected, determining that the microphone of the first wireless earphone is in the blocked hole state.

3. The method as claimed in claim 2, wherein the acquiring the reference energy parameter of the sound wave, comprises:
acquiring a frequency and initial an amplitude of the sound wave;
acquiring distance between the sound source and the microphone of the first wireless earphone;
determining a reference amplitude after the sound wave is transmitted in the distance, according to the initial amplitude and the distance; and
determining the reference energy parameter of the sound wave according to the frequency and the reference amplitude.

4. The method as claimed in claim 3, wherein the sound source comprises the first wireless earphone or the second wireless earphone or the mobile terminal, and there is no obstruction between the sound source and the microphone of the first wireless earphone.

5. The method as claimed in claim 4, wherein when the sound source is a speaker of the first wireless earphone, the preset distance is distance between the speaker of the first wireless earphone and the microphone of the first wireless earphone, and the distance is determined based on a structural relationship between the speaker and the microphone of the first wireless earphone;
when the sound source is a speaker of the second wireless earphone, the preset distance is distance between the speaker of the second wireless earphone and the microphone of the first wireless earphone, and the distance is determined based on signaling interaction between the first wireless earphone and the second wireless earphone; and
when the sound source is a speaker of the mobile terminal, the preset distance is distance between the speaker of the mobile terminal and the microphone of the first wireless earphone, the distance is determined based on signaling interaction between the first wireless earphone and the mobile terminal.

6. The method as claimed in claim 1, further comprising:
controlling the microphone of the second wireless earphone to acquire the sound wave of the preset frequency band; and
determining a second energy parameter of the sound wave acquired by the second wireless earphone;
wherein the determining whether the microphone of the first wireless earphone being in the blocked hole state according to the first energy parameter, comprises:
comparing the first energy parameter with the second energy parameter; and
when the first energy parameter mismatching the second energy parameter is detected, determining that the microphone of the first wireless earphone is in the blocked hole state.

7. The method as claimed in any one of claims 1-6, wherein before the acquiring the sound wave of the preset frequency band through the microphone of the first wireless earphone, the method further comprises:
acquiring a first distance parameter between the first wireless earphone and the mobile terminal, and a second distance parameter between the first wireless earphone and the second wireless earphone; and
when the first distance parameter being greater than the second distance parameter is detected, controlling the speaker of the second wireless earphone to emit the sound wave of the preset frequency band.

8. The method as claimed in claim 7, wherein after the determining that the microphone of the first wireless earphone is in the blocked hole state according to the first energy parameter, the method further comprises:
when a sound pickup request is detected and the first wireless earphone is in a wearing state, determining the wearing state of the second wireless earphone; and
when the second wireless earphone being in the wearing state is detected, disabling a sound pickup function of the microphone of the first wireless earphone, and performing the sound pickup function through the microphone of the second wireless earphone.

9. The method as claimed in claim 8, further comprising:
when the second wireless earphone being in a non-wearing state is detected, acquiring a third distance parameter between the first wireless earphone and the mobile terminal, and a fourth distance parameter between the first wireless earphone and the second wireless earphone; and
when the third distance parameter being less than the fourth distance parameter is detected, sending a notification message to the mobile terminal, wherein the notification message is configured to notify the mobile terminal to perform the sound pickup function through a microphone of the mobile terminal.

10. A microphone hole blockage detection device applied to a first wireless earphone of a wireless earphone; wherein the wireless earphone comprises the first wireless earphone and a second wireless earphone; the first wireless earphone is communicatively coupled to a mobile terminal and the second wireless earphone; and the microphone hole blockage detection device comprises a processing unit and a communication unit; and
the processing unit is configured to control the communication unit to acquire a sound wave of a preset frequency band through a microphone of the first wireless earphone, where the preset frequency band comprises a frequency band in which any types of sound wave comprising an ultrasonic wave, an audible sound wave, and an infrasound wave, are located; the processing unit is configured to determine a first energy parameter of the sound wave acquired by the first wireless earphone; and the processing unit is configured to determine whether the microphone of the first wireless earphone is in a blocked hole state according to the first energy parameter.

11. The device as claimed in claim 10, wherein when the microphone of the first wireless earphone being in the blocked hole state is determined according to the first energy parameter, the processing unit is configured to acquire a reference energy parameter of the sound wave, wherein the reference energy parameter is configured to represent an energy parameter after the sound wave is transmitted by a sound source in preset distance; and the preset distance is distance between the sound source and the microphone of the first wireless earphone; the processing unit is configured to compare the first energy parameter with the reference energy parameter; and the processing unit is configured to determine that the microphone of the first wireless earphone is in the blocked hole state, when the first energy parameter mismatching the reference energy parameter is detected.

12. The device as claimed in claim 11, wherein when the reference energy parameter of the sound wave is acquired, the processing unit is configured to acquire a frequency and initial an amplitude of the sound wave; the processing unit is configured to acquire distance between the sound source and the microphone of the first wireless earphone; the processing unit is configured to determine a reference amplitude after the sound wave is transmitted in the distance, according to the initial amplitude and the distance; and the processing unit is configured to determine the reference energy parameter of the sound wave according to the frequency and the reference amplitude.

13. The device as claimed in claim 12, wherein the sound source comprises the first wireless earphone or the second wireless earphone or the mobile terminal, and there is no obstruction between the sound source and the microphone of the first wireless earphone.

14. The device as claimed in claim 13, wherein when the sound source is a speaker of the first wireless earphone, the preset distance is distance between the speaker of the first wireless earphone and the microphone of the first wireless earphone, and the distance is determined based on a structural relationship between the speaker and the microphone of the first wireless earphone;
when the sound source is a speaker of the second wireless earphone, the preset distance is distance between the speaker of the second wireless earphone and the microphone of the first wireless earphone, and the distance is determined based on signaling interaction between the first wireless earphone and the second wireless earphone; and
when the sound source is a speaker of the mobile terminal, the preset distance is distance between the speaker of the mobile terminal and the microphone of the first wireless earphone, the distance is determined based on signaling interaction between the first wireless earphone and the mobile terminal.

15. The device as claimed in claim 10, wherein the processing unit is configured to control the microphone of the second wireless earphone to acquire the sound wave of the preset frequency band; and the processing unit is configured to determine a second energy parameter of the sound wave acquired by the second wireless earphone;
wherein when the microphone of the first wireless earphone being in the blocked hole state is determined according to the first energy parameter, the processing unit is configured to compare the first energy parameter with the second energy parameter; and the processing unit is configured to determine that the microphone of the first wireless earphone is in the blocked hole state, when the first energy parameter mismatching the second energy parameter is detected.

16. The device as claimed in any one of claims 10-15, wherein before the processing unit acquires the sound wave of the preset frequency band through the microphone of the first wireless earphone, the processing unit is further configured to acquire a first distance parameter between the first wireless earphone and the mobile terminal, and a second distance parameter between the first wireless earphone and the second wireless earphone; and the processing unit is further configured to control the speaker of the second wireless earphone to emit the sound wave of the preset frequency band, when the first distance parameter being greater than the second distance parameter is detected.

17. The device as claimed in claim 16, wherein after the processing unit determines that the microphone of the first wireless earphone is in the blocked hole state according to the first energy parameter, the processing unit is further configured to determine the wearing state of the second wireless earphone, when a sound pickup request is detected and the first wireless earphone is in a wearing state; and
when the second wireless earphone being in the wearing state is detected, disabling a sound pickup function of the microphone of the first wireless earphone, and performing the sound pickup function through the microphone of the second wireless earphone.

18. The device as claimed in claim 17, wherein the processing unit is further configured to acquire a third distance parameter between the first wireless earphone and the mobile terminal, and a fourth distance parameter between the first wireless earphone and the second wireless earphone, when the second wireless earphone being in a non-wearing state is detected, and the processing unit is further configured to send a notification message to the mobile terminal, when the third distance parameter being less than the fourth distance parameter is detected, wherein the notification message is configured to notify the mobile terminal to perform the sound pickup function through a microphone of the mobile terminal.

19. A first wireless earphone, comprising: a processor, a memory, and at least one of programs; wherein the at least one of programs are stored in the memory and configured to be executed by the processor; the at least one of programs comprise instructions configured to execute operations in the method described in any one of claims 1-9.

20. A computer readable storage medium, configured to store a computer program for electronic data exchange; wherein the computer program is configured to execute operations in the method described in any one of claims 1-9.
